# FASCICULE DE BREVET EUROPEEN

(11) **EP 2 928 711 B1**
(45) Date de publication et mention de la délivrance du brevet: **18.04.2018**
(21) Numéro de dépôt: 13803165.3
(22) Date de dépôt: 20.11.2013
(51) Int. Cl.: B60J 1/17, B60J 1/20, B60J 5/04, E05C 17/20

(54) **PORTE LATÉRALE DE VÉHICULE AUTOMOBILE AVEC UN DISPOSITIF POUR FIXER UN GUIDE COULISSE DE VITRE MOBILE**
FAHRZEUGSEITENTÜR MIT EINER VORRICHTUNG ZUR FESTLEGUNG DER FÜHRUNGSSCHIENE EINES ÖFFNUNGSFÄHIGEN FENSTERS
SIDE DOOR OF A MOTOR VEHICLE WITH A DEVICE FOR SECURING A SLIDING GUIDE OF A MOVABLE WINDOW

(30) Priorité: 05.12.2012 FR 1261668
(43) Date de publication de la demande: 14.10.2015
(73) Titulaire: PSA Automobiles SA, 78300 Poissy (FR)
(72) Inventeur: MISSIROLI, Matteo, F-75003 Paris (FR)
(74) Mandataire: Fosse, Danièle
(86) Numéro de dépôt international: PCT/FR2013/052808
(87) Numéro de publication internationale: WO 2014/087071

(56) Documents cités:
- DE-A1- 10 014 946
- FR-A1- 2 885 323
- US-A- 5 855 095

## Description

La présente invention concerne une porte latérale de véhicule automobile comportant un dispositif pour fixer un guide coulisse de vitre mobile à la porte latérale de véhicule automobile, ce dispositif comprenant un support relié audit guide coulisse.

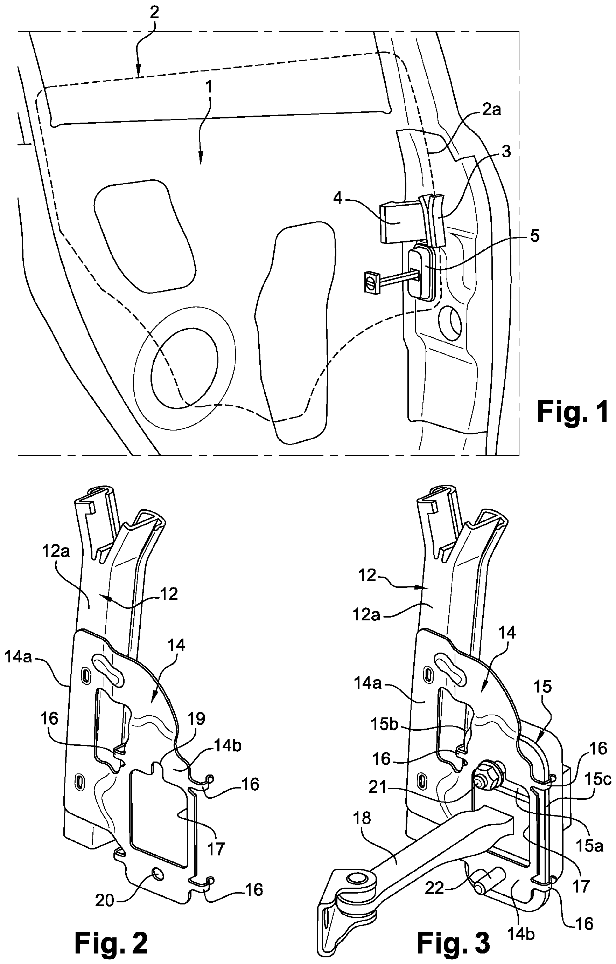

Un dispositif connu de ce type est représenté sur la figure 1.

Cette figure 1 montre la face intérieure de la doublure 1 d'une porte latérale de véhicule automobile qui comporte une vitre mobile 2.

Cette vitre 2 est représentée en position ouverte et son bord avant 2a est engagé dans la rainure verticale d'un guide coulisse de vitre 3.

Ce guide coulisse 3 permet de maintenir la vitre 2 et d'éviter que celle-ci fasse du bruit lors du claquage de la porte notamment lorsque la vitre 2 est ouverte.

Le bruit ci-dessus porte atteinte à la qualité perçue par les utilisateurs.

Le guide coulisse 3 est solidaire d'un support 4 qui est fixé à la doublure 1 de la porte au moyen de vis non représentées.

On voit sur la figure 1 que le guide coulisse 3 et son support 4 sont situés à proximité de l'arrêt de porte 5 qui de façon connue permet de limiter l'angle d'ouverture de la porte.

Le support 4 encombre l'espace disponible à proximité de l'arrêt de porte 5.

De plus, la fixation de ce support 4 à la doublure de la porte a une incidence non négligeable sur les coûts de montage.

En outre, l'expérience a montré que le guide coulisse 3 n'était pas toujours nécessaire, de sorte que le fait de réserver sur la porte une zone et des moyens pour fixer éventuellement un guide coulisse grève inutilement les coûts de fabrication.

On connaît par FR 2885323 une porte vitrée comportant un guide coulisse de la vitre monté sur un support fixé sur une paroi de la porte, le guide coulisse comportant des moyens de fixation sur ledit support fixé à la porte.

Le but de l'invention est de remédier aux inconvénients ci-dessus.

Ce but est atteint, selon l'invention, grâce à une porte latérale de véhicule automobile comportant un guide coulisse de vitre mobile fixé à ladite porte au moyen d'un dispositif comprenant un support relié audit guide coulisse, caractérisée en ce que ledit support comprend des moyens pour le rendre solidaire d'un arrêt de porte fixé à ladite porte latérale

Le fait que le support du guide coulisse comporte des moyens pour le rendre solidaire d'un arrêt de porte permet de réduire les coûts de montage et d'éviter ainsi les inconvénients évoqués plus haut.

Selon une version préférée de l'invention, ledit support est une plaquette rigide dont l'un des côtés est fixé à une face dudit guide coulisse, cette plaquette comportant une partie destinée à être serrée entre une face dudit arrêt de porte et la doublure de la porte.

Ainsi, lors de la fixation de l'arrêt de porte sur la doublure de cette porte, on fixe en même temps la partie de la plaquette qui supporte le guide coulisse contre la porte, ce qui permet de diminuer les coûts de montage.

Dans un mode de réalisation particulièrement avantageux de l'invention, le support du guide coulisse comporte des moyens permettant de rendre ce support solidaire dudit arrêt de porte avant fixation définitive de ce dernier à la porte.

De préférence, lesdits moyens sont constitués par des moyens permettant de mettre ladite partie du support en contact avec ladite face de l'arrêt de porte.

Ces moyens permettent ainsi de faciliter le montage et la fixation du guide coulisse à la porte du véhicule.

Dans un mode de réalisation avantageux de l'invention, lesdits moyens comprennent des pattes flexibles pouvant s'encliqueter sur deux bords opposés de l'arrêt de porte.

Selon d'autres particularités avantageuses de l'invention :
- ladite partie du support comprend un évidement destiné au passage du tirant articulé de l'arrêt de porte ;
- ladite partie du support comporte des trous de passage pour des vis de fixation permettant de fixer l'arrêt de porte sur la doublure de la porte.

D'autres particularités et avantages de l'invention apparaîtront encore tout au long de la description ci-après.

Aux dessins annexés, donnés à titre d'exemples, non limitatifs :
- la figure 2 représente en perspective un ensemble guide coulisse et support, selon l'invention,
- la figure 3 représente en perspective l'ensemble de la figure 2 fixé à un arrêt de porte avant montage sur une porte de véhicule,
- la figure 4 est une vue montrant la face intérieure d'une porte de véhicule automobile comportant l'ensemble représenté sur la figure 3.

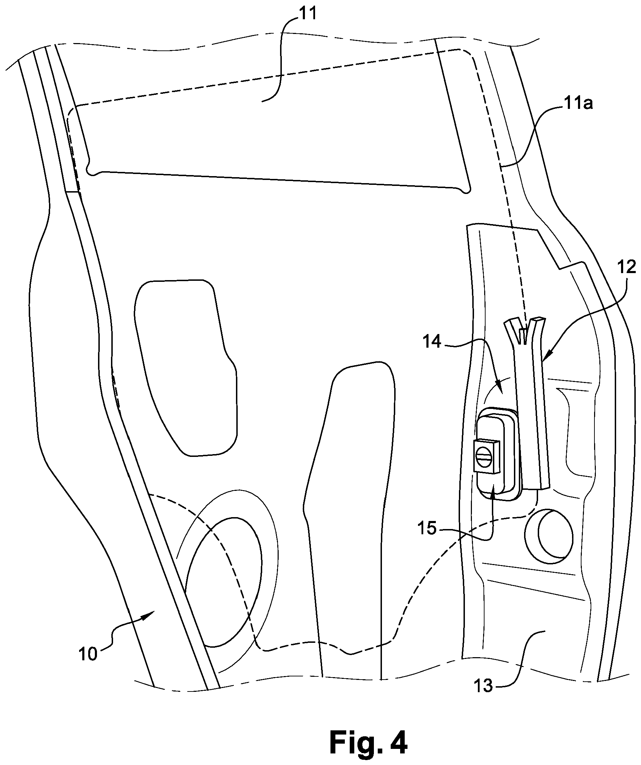

La figure 4 représente partiellement une porte latérale 10 équipée d'une vitre mobile 11 entre une position fermée et une position ouverte.

Dans l'exemple représenté, la vitre 11 est en position partiellement ouverte et son bord latéral 11a est engagé dans un guide coulisse 12 qui permet de caler la vitre 11 dans une direction perpendiculaire à la vitre.

Ce calage permet d'éviter que la vitre 11 fasse du bruit lors du claquage de la porte vers sa position fermée.

Le guide coulisse 12 a une structure connue en elle-même et est fixée sur la doublure 13 de la porte 10 grâce à un dispositif qui comprend, comme montré sur la figure 2, un support 14 qui est relié au guide coulisse 12.

Conformément à l'invention, ce support 14 comprend des moyens qui seront détaillés plus loin, pour le rendre solidaire d'un arrêt de porte 15, comme montré sur la figure 3, destiné à être fixé à la porte latérale 10, comme indiqué sur la figure 4.

Le support 14 est une plaquette rigide par exemple en tôle dont l'un 14a des côtés est fixé à une face 12a du guide coulisse 12.

La plaquette comporte une partie 14b destinée à être serrée entre une face 15a (voir figure 3) de l'arrêt de porte 15 et la doublure 13 de la porte 10.

Par ailleurs, la figure 3 montre que le support 14 comporte des moyens permettant de rendre ce support 14 solidaire de l'arrêt de porte 15 avant fixation définitive de ce dernier à la porte 10.

Comme indiqué sur la figure 3, ces moyens sont constitués par des moyens 16 permettant d'appliquer la partie 14b du support 14 sur la face 15a de l'arrêt de porte.

Dans l'exemple représenté sur la figure 3, ces moyens comprennent des pattes flexibles 16 pouvant s'encliqueter sur deux bords opposés 15b, 15c de l'arrêt de porte 15.

Les figures 2 et 3 montrent en outre que la partie 14b du support 14 en forme de plaquette comprend un évidement 17 destiné au passage du tirant articulé 18 de l'arrêt de porte 15, comme indiqué sur la figure 3.

On voit également sur les figures 2 et 3 que la partie 14b du support 14 comporte des trous de passage 19, 20 pour une vis de fixation 21 et un doigt d'indexation 22 permettant de fixer l'arrêt de porte 15 sur la doublure 13 de la porte 10.

Ainsi pour fixer le guide coulisse 12 et l'arrêt de porte 15 sur la doublure 13 de la porte 10, il suffit de fixer temporairement le guide coulisse 12 à l'arrêt de porte 15 grâce aux pattes flexibles 16 portées par le support 14 pour obtenir un ensemble unitaire puis de fixer cet ensemble à la doublure 13 grâce au doigt 22 et à la vis 21.

On réduit ainsi considérablement la durée du montage du guide coulisse 12 et de l'arrêt de porte 15.

Bien entendu, l'invention n'est pas limitée à l'exemple que l'on vient de décrire.

Ainsi d'autres moyens de pré-maintien que les pattes flexibles 16 peuvent être envisagés, tels qu'un ruban adhésif double face appliqué entre la partie 14b du support 14 et la face 15a de l'arrêt de porte 15.

## Revendications

1. Porte latérale de véhicule automobile comportant un guide coulisse (12) de vitre mobile (11) fixé à ladite porte (10) au moyen d'un dispositif comprenant un support (14) relié audit guide coulisse (12), **caractérisée en ce que** ledit support (14) comprend des moyens pour le rendre solidaire d'un arrêt de porte (15) fixé à ladite porte latérale (10).

2. Porte selon la revendication 1, **caractérisée en ce que** ledit support (14) est une plaquette rigide dont l'un (14a) des côtés est fixé à une face (12a) dudit guide coulisse (12), cette plaquette comportant une partie (14b) destinée à être serrée entre une face (15a) dudit arrêt de porte (15) et la doublure (13) de la porte.

3. Porte selon l'une des revendications 1 ou 2, **caractérisée en ce que** ledit support (14) comporte des moyens permettant de rendre ce support (14) solidaire dudit arrêt de porte (15) avant fixation définitive de ce dernier à la porte (10).

4. Porte selon les revendications 2 et 3, **caractérisée en ce que** lesdits moyens sont constitués par des moyens permettant de mettre ladite partie (14b) du support (14) en contact avec ladite face (15a) de l'arrêt de porte (15).

5. Porte selon la revendication 4, **caractérisée en ce que** lesdits moyens comprennent des pattes flexibles (16) pouvant s'encliqueter sur deux bords opposés (15b, 15c) de l'arrêt de porte (15).

6. Porte selon l'une des revendications 2 à 5, **caractérisée en ce que** ladite partie (14b) du support (14) comprend un évidement (17) destiné au passage du tirant articulé (18) de l'arrêt de porte (15).

7. Porte selon l'une des revendications 2 à 6, **caractérisée en ce que** ladite partie (14b) du support (14) comporte des trous de passage (19, 20) pour des vis de fixation permettant de fixer l'arrêt de porte (15) sur la doublure (13) de la porte (10).

## Patentansprüche

1. Kraftfahrzeugseitentür, die eine Gleitführung (12) einer beweglichen Scheibe (11) umfasst, die auf der Tür (10) mittels einer Vorrichtung befestigt ist, die einen Träger (14) umfasst, der mit der Gleitführung (12) verbunden ist, **dadurch gekennzeichnet, dass** der Träger (14) Mittel umfasst, um ihn fest mit einem Türanschlag (15), der an der Seitentür (10) befestigt ist, zu verbinden.

2. Tür nach Anspruch 1, **dadurch gekennzeichnet, dass** der Träger (14) eine starre Platte ist, von welcher eine (14a) der Seiten an einer Fläche (12a) der Führungsschiene (12) befestigt ist, wobei diese Platte einen Teil (14b) umfasst, der dazu bestimmt ist, zwischen einer Fläche (15a) des Türanschlags (15) und der Innenverkleidung (13) der Tür eingeklemmt zu sein.

3. Tür nach einem der Ansprüche 1 oder 2, **dadurch gekennzeichnet, dass** der Träger (14) Mittel umfasst, die es erlauben, diesen Träger (14) fest mit dem Türanschlag (15) vor dem endgültigen Befestigen dieses Letzteren an der Tür (10) zu verbinden.

4. Tür nach den Ansprüchen 2 und 3, **dadurch gekennzeichnet, dass** die Mittel aus Mitteln bestehen, die es erlauben, den Teil (14b) des Trägers (14) mit der Fläche (15a) des Türanschlags (15) in Berührung zu bringen.

5. Tür nach Anspruch 4, **dadurch gekennzeichnet, dass** die Mittel biegsame Pratzen (16) umfassen, die auf zwei entgegengesetzten Rändern (15b, 15c) des Türanschlags (15) einrasten können.

6. Tür nach einem der Ansprüche 2 bis 5, **dadurch gekennzeichnet, dass** der Teil (14b) des Trägers (14) eine Aussparung (17) umfasst, die für das Durchgehen des Gelenkzugstabs (18) des Türanschlags (15) bestimmt ist.

7. Tür nach einem der Ansprüche 2 bis 6, **dadurch gekennzeichnet, dass** der Teil (14b) des Trägers (14) Durchgangsbohrungen (19, 20) für Befestigungsschrauben umfasst, die es erlauben, den Türanschlag (15) auf der Innenverkleidung (13) der Tür (10) zu befestigen.

## Claims

1. A side door of a motor vehicle, comprising a sliding guide (12) of a movable window (11) secured to said door (10) by means of a device including a support (14) connected to said sliding guide (12), **characterized in that** said support (14) includes means for making it integral with a door stopper (15) secured to said side door (10).

2. The door according to Claim 1, **characterized in that** said support (14) is a rigid plate, one (14a) of the sides of which is secured to a face (12a) of said sliding guide (12), this plate comprising a portion (14b) intended to be clamped between a face (15a) of said door stopper (15) and the trim (13) of the door.

3. The door according to one of Claims 1 or 2, **characterized in that** said support (14) comprises means permitting making this support (14) integral with said door stopper (15) before definitive securing of the latter to the door (10).

4. The door according to Claims 2 and 3, **characterized in that** said means are constituted by means permitting putting said portion (14b) of the support (14) in contact with said face (15a) of the door stopper (15).

5. The door according to Claim 4, **characterized in that** said means include flexible lugs (16) able to snap onto two opposite edges (15b, 15c) of the door stopper (15).

6. The door according to one of Claims 2 to 5, **characterized in that** said portion (14b) of the support (14) includes a recess (17) intended for the passage of the articulated strut (18) of the door stopper (15).

7. The door according to one of Claims 2 to 6, **characterized in that** said portion (14b) of the support (14) comprises passage holes (19, 20) for attachment screws permitting the door stopper (15) to be secured on the trim (13) of the door (10).
